# EUROPÄISCHE PATENTANMELDUNG

(11) **EP 2 693 698 A1**
(43) Veröffentlichungstag der Anmeldung: **05.02.2014**
(21) Anmeldenummer: 13177630.4
(22) Anmeldetag: 23.07.2013
(51) Int. Cl.: H04L 12/28, H04B 5/00

(54) **Gerät der Elektro-Installation und/oder Gebäudesystemtechnik und/oder Türkommunikation**

(30) Priorität: 01.08.2012 DE 102012015274
(71) Anmelder: ABB AG, 68309 Mannheim (DE)
(72) Erfinder: Linde, Holger, 44137 Dortmund (DE); Platte, Jörg, 44149 Dortmund (DE); Kleine-Cosack, Christian, 44229 Dortmund (DE); Wegner, Tobias, 44147 Dortmund (DE)

(57) **Zusammenfassung**

Es wird ein Gerät (1) der Elektro-Installation und/oder Gebäudesystemtechnik und/oder Türkommunikation mit einer Mikrocontroller-Unit (3) vorgeschlagen, welche mit einem konventionellen Bedienelement (2) und optional einem Parameterspeicher (4) verbunden ist, wobei eine Kurzstrecken-Kommunikationseinheit (5) mit einer Reichweite von maximal 50 cm vorgesehen und mit der Mikrocontroller-Unit (3) verbunden ist und wobei eine Kurzstrecken-Kommunikation mit einer korrespondierend ausgebildeten Kurzstrecken-Kommunikationseinheit (10) eines Mobilgeräts (7) erfolgt.

## Beschreibung

Die Erfindung betrifft ein Gerät der Elektro-Installation und/oder Gebäudesystemtechnik und/oder Türkommunikation.

Allgemein bekannte Geräte der Elektro-Installation und/oder Gebäudesystemtechnik und/oder Türkommunikation verwenden drahtgebunde Schnittstellen zur Konfiguration oder zur Parameteränderung. Drahtlose Kommunikationsschnittstellen werden vielfach für die Kommunikation zwischen Sensorik und Aktorik verwendet.

Geräte der Elektro-Installation und/oder Gebäudesystemtechnik und/oder Türkommunikation haben gemein, dass sie in der Regel ausschließlich über Bedienelemente wie z.B. Drehknöpfe, Taster, Schalter, Hebel oder Ähnliches am Gerät bedient werden können. Die gewählte Einstellung bzw. Aktion des Geräts wird beispielsweise durch Leuchtdioden oder einen Gehäuseaufdruck oder grafische bzw. alphanumerische LED- oder LCD-Anzeigen visualisiert. Diese konventionelle Art der Bedienschnittstelle weist einige Nachteile auf, insbesondere, aber nicht nur, wenn komplexe Funktionen umgesetzt werden sollen:
- Eine steigende Anzahl von Bedienelementen verringert prinzipiell die Übersichtlichkeit und erschwert die Bedienung.
- Eine steigende Anzahl an Bedienelementen erhöht die Kosten.
- Eine grafische Vor-Ort-Bedienung mittels Display und Tasten erhöht zwar die Flexibilität, ist jedoch aus Kostengründen oft nicht vertretbar.
- Aus konstruktiven Gründen ist der Spielraum für Bedienelemente in Bezug auf Größe und Position sehr begrenzt.
- Bedienelemente, die dem Anwender im Betrieb zugänglich gemacht werden, weisen oftmals die konstruktive Anforderung auf, dass normative Sicherheitsabstände (Berührschutz) zu der benachbarten Elektronik eingehalten werden müssen. Alternativ müssen die Geräte mit Sicherheitskleinspannung betrieben werden, was aus Kostengründen häufig nicht akzeptabel ist.
- Funktionen, die nur selten gebraucht oder von einem kleinen Teil der Kunden/Anwender gewünscht werden, lassen sich mit konventionellen Bedienelementen nur zum Teil "ausblenden" und müssen mitgefertigt und bezahlt werden, auch wenn sie nur relativ wenigen Anwendern zugutekommen.
- Es gibt, abgesehen von der Bedienungsanleitung oder einem technischen Handbuch, keinerlei Unterstützung bei der Inbetriebnahme oder der Bedienung des Geräts.

Der Erfindung liegt die Aufgabe zugrunde, ein optimiertes Gerät der Elektro-Installation und/oder Gebäudesystemtechnik und/oder Türkommunikation anzugeben.

Diese Aufgabe wird erfindungsgemäß gelöst durch ein Gerät der Elektro-Installation und/oder Gebäudesystemtechnik und/oder Türkommunikation mit einer Mikrocontroller-Unit, welche mit einem konventionellen Bedienelement und optional einem Parameterspeicher verbunden ist, wobei eine Kurzstrecken-Kommunikationseinheit mit einer Reichweite von maximal 50 cm vorgesehen und mit der Mikrocontroller-Unit verbunden ist und wobei eine Kurzstrecken-Kommunikation mit einer korrespondierend ausgebildeten Kurzstrecken-Kommunikationseinheit eines Mobilgeräts erfolgt.

Die mit der Erfindung erzielbaren Vorteile bestehen insbesondere darin, dass die Anzahl an Bedienelementen des Geräts klein gehalten werden kann, was zur übersichtlichen und kompakten Ausführung des Elektro-Installationsgeräts beiträgt. Selten gebrauchte Funktionen können über die Kurzstrecken-Kommunikation erfolgen. Inbetriebnahme und/oder Bedienung können durch das Mobilgerät und insbesondere unter Verwendung dessen grafischer Bedienschnittstelle des Mobilgeräts erfolgen.

Beispielsweise kann dabei durch die Kurzstrecken-Kommunikationseinheit eine drahtlose Kurzstrecken-Kommunikationsstrecke mittels Kurzstreckenfunk / NFC (Near Field Communication) oder eine drahtlose Kurzstrecken-Kommunikationsstrecke mittels Infrarot realisiert sein.

In vorteilhafter Weise kann eine Vor-Ort-Bedienung des Geräts über eine grafische Bedienschnittstelle des Mobilgeräts via Kurzstrecken-Kommunikation erfolgen, was insbesondere die Anzahl möglicher Bedien-Funktionen vergrößert.

In zweckmäßiger Weiterbildung kann eine assistierte Bedienung des Geräts über eine grafische Bedienschnittstelle des Mobilgeräts via Kurzstrecken-Kommunikation erfolgen, was beispielsweise eine Inbetriebnahme des Geräts sehr erleichtert.

Des Weiteren kann eine Parametrierung des Geräts über das Mobilgerät via Kurzstrecken-Kommunikation erfolgen, was vorteilhaft während des normalen Betriebes geschehen kann, ohne dass hierzu irgendwelche Baukomponenten des Geräts zu demontieren wären.

Einen besonderen Vorteil stellt es auch dar, dass Software-Updates für das Gerät über das Mobilgerät via Kurzstrecken-Kommunikation erfolgen können, wodurch das Gerät stets auf dem neuesten Stand gehalten wird.

In weiterer Ausgestaltung können Statusabfragen und/oder Datenabfragen vom Gerät über das Mobilgerät via Kurzstrecken-Kommunikation erfolgen, was beispielsweise eine Fehlersuche erleichtert.

Ferner kann eine Übertragung eines kompletten oder teilweisen Konfigurationsabbildes des Geräts via Kurzstrecken-Kommunikation auf das Mobilgerät erfolgen. Vorteilhaft kann das Konfigurationsabbild dann auch für andere Geräte verwendet werden.

Des Weiteren kann eine Authentifizierung eines Benutzers/Anwenders des Geräts gefordert werden und via Kurzstrecken-Kommunikation unter Einsatz des Mobilgeräts erfolgen, um eine missbräuchliche Nutzung oder Parameter-Verstellung zu verhindern.

In zweckmäßiger Weiterbildung kann eine Geräteidentifizierung via Kurzstrecken-Kommunikation unter Einsatz des Mobilgeräts erfolgen und infolgedessen beispielsweise ein Handbuch-Download unmittelbar aus dem Internet erfolgen.

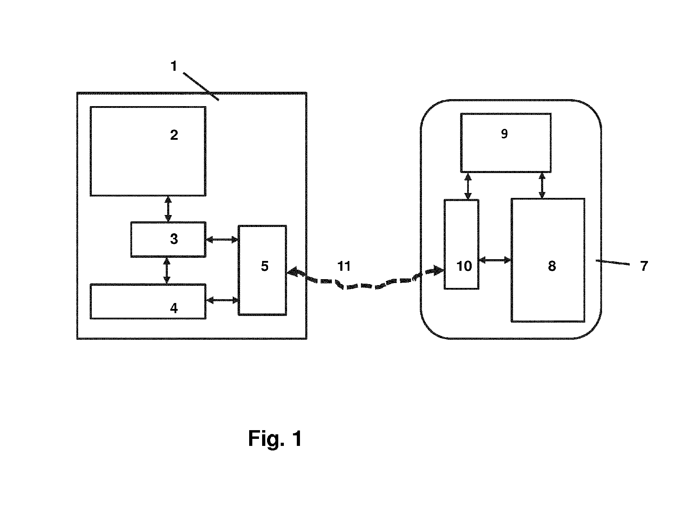

Die Erfindung wird nachstehend an Hand des in der Zeichnung dargestellten Ausführungsbeispiels erläutert. In Fig. 1 ist ein Gerät 1 der Elektro-Installation und/oder Gebäudesystemtechnik und/oder Türkommunikation dargestellt - nachfolgend auch als Elektro-Installationsgerät 1 bezeichnet - , welches (bedarfsweise) über eine drahtlose Kurzstrecken-Kommunikationsstrecke 11 mit einem Mobilgerät 7 respektive mobilem Endgerät, wie Smartphone, Smartpad, Tablet-PC, kommunizieren kann. Das Elektro-Installationsgerät 1 kann beispielsweise in Form eines Schalters, eines Raumtemperaturreglers, eines Bewegungs- und Präsenzmelders, einer Zeitschaltuhr, eines Rauchmelders, eines Dämmerungsschalters, eines Dimmers, eines KNX-Gerätes (Konnex), einer Wohnungsstation oder einer Türstation einer Türkommunikation usw. ausgebildet sein.

Das Elektro-Installationsgerät 1 weist ein konventionelles Bedienelement 2 (beispielsweise einen Drehknopf, einen Taster, einen Schalter, einen Hebel oder Ähnliches) auf, welches mit einer Mikrocontroller-Unit (MCU) 3 verbunden ist. An die Mikrocontroller-Unit 3 ist ein Parameterspeicher 4 angeschlossen. Eine Kurzstrecken-Kommunikationseinheit 5 ist mit der Mikrocontroller-Unit 3 und optional mit dem Parameterspeicher 4 verbunden.

Falls die Mikrocontroller-Unit 3 mit einem EEPROM ausgestattet ist, welches als Parameterspeicher dienen kann, kann der separate Parameterspeicher 4 entfallen.

Das Mobilgerät 7 weist eine grafische Bedienschnittstelle 8 (Display) auf. Eine Applikation 9 respektive lokale Anwendung des Mobilgeräts 7 dient speziell der Bedienung des Elektro-Installationsgeräts 1. Eine Kurzstrecken-Kommunikationseinheit 10 ermöglicht die Kommunikation mit einem Elektro-Installationsgerät 1 über die drahtlose Kurzstrecken-Kommunikationsstrecke 11. Unter der Kurzstrecken-Kommunikationsstrecke 11 wird eine Strecke mit einer maximalen Reichweite von 50 cm verstanden, welche betrieben wird:
- mittels Kurzstreckenfunk / NFC (Near Field Communication) oder
- mittels Infrarot.

Die vorgestellte Erfindung schlägt einen alternativen Weg der Mensch-Geräte-Interaktion vor. Dabei wird das Elektro-Installationsgerät 1 um eine drahtlose Kurzstrecken-Kommunikationsschnittstelle, d. h. die Kurzstrecken-Kommunikationseinheit 5 ergänzt. Die Kommunikation erfolgt dann zwischen dem Elektro-Installationsgerät 1 und einem Mobilgerät 7 wie einem Mobiltelefon (Smartphone) oder einem Tablet / Pad. Der Benutzer/Anwender interagiert dann mit dem Elektro-Installationsgerät 1 unter Zuhilfenahme der Applikation 9 respektive lokale Anwendung, welche auf dem Mobilgerät 7 installiert ist. Diese Interaktion deckt unterschiedliche Aspekte ab, die nicht nur vorteilhaft die eingangs beschriebenen Nachteile konventioneller Bedienschnittstellen in der Elektro-Installationstechnik überwinden, sondern auch eine Vielzahl neuer Möglichkeiten bieten:
Als erste neue Möglichkeit ist die Durchführbarkeit einer Vor-Ort-Bedienung anzuführen: Das Elektro-Installationsgerät 1 wird über die grafische Bedienschnittstelle 8 respektive grafische Oberfläche auf dem Mobilgerät 7 direkt gesteuert. Auf diese Weise können zum Einen Aktionen auf der grafischen Bedienschnittstelle 8 abgebildet werden, die auch über die konventionellen Bedienelemente 2 ausgelöst werden können, wie beispielsweise Dimmen, zum anderen können auch Funktionen realisiert werden, für die überhaupt kein konventionelles Bedienelement 2 beim Elektro-Installationsgerät 1 vorgesehen ist, beispielsweise das Einstellen der Farbtemperatur einer Beleuchtung.

Als zweite neue Möglichkeit ist die Durchführbarkeit von selektiven Parameteränderungen anzuführen: Mittels des Mobilgeräts 7 können einzelne Parameter des Elektro-Installationsgeräts 1 geändert werden, auch wenn hierfür keine konventionellen Bedienelemente 2 beim Elektro-Installationsgerät 1 vorgesehen sind, beispielsweise die Farbwahl des Orientierungslichts eines Lichtschalters. Das Elektro-Installations-gerät 1 kann also besser an die individuellen Wünsche des Kunden/Anwenders angepasst werden, ohne dass hierzu zusätzliche konventionelle Bedienelemente 2 beim Elektro-Installationsgerät 1 erforderlich wären. Ein weiterer Vorteil ist, dass das Elektro-Installationsgerät 1 im laufenden Betrieb mit Hilfe des Mobilgeräts 7 parametriert werden kann, ohne dass hierzu beispielsweise Bedienteile des Elektro-Installationsgeräts 1 entfernt werden müssen oder das Elektro-Installationsgerät 1 selbst ausgebaut werden muss.

Als dritte neue Möglichkeit ist die Realisierbarkeit einer assistierten Bedienung anzuführen: Der Einsatz des Mobilgeräts 7 erweitert das Elektro-Installationsgerät 1 um die grafische Benutzerschnittstelle 8. Diese grafische Benutzerschnittstelle 8 kann grundsätzlich zu einer einfacheren und flexibleren Bedienung des Elektro-Installationsgeräts 1 führen. Beispielsweise kann die grafische Benutzerschnittstelle 8 dazu genutzt werden, um dem Anwender durch Hilfetexte, Sprachassistenten oder Filmsequenzen bei der Inbetriebnahme zu assistieren. Die Identifikation des Elektro-Installationsgeräts 1 erfolgt dabei durch die drahtlose Kommunikationsschnittstelle, d. h. die Kurzstrecken-Kommunikationseinheit 5.

Als vierte neue Möglichkeit ist die relativ einfache Realisierbarkeit von Software-Updates anzuführen: Mit Hilfe der drahtlosen Kommunikationsschnittstelle, d. h. der Kurzstrecken-Kommunikationseinheit 5 lässt sich ein Software-Update realisieren, welches das Elektro-Installationsgerät 1 um neue Funktionen erweitert oder Fehler der integrierten Software behebt. Das Software-Update wird vom Mobilgerät 7 vorzugsweise aus dem Internet heruntergeladen.

Als fünfte neue Möglichkeit ist die Realisierbarkeit von Statusabfragen anzuführen: Das Mobilgerät 7 kann dazu verwendet werden, um den Status des Elektro-Installationsgeräts 1 zu überprüfen und bei einem Fehlverhalten der elektrischen Anlage wichtige Informationen zu sammeln, wie beispielsweise Betriebsstunden, Software-Version, Seriennummer, Fehlerspeicher usw. Darüber hinaus können statistische Daten erfasst werden, beispielsweise der Zimmertemperaturverlauf über einen definierten Zeitraum.

Als sechste neue Möglichkeit ist die Durchführbarkeit des Erstellens und des Kopierens von Konfigurationsabbildern anzuführen: Mit Hilfe der drahtlosen Kommunikationsschnittstelle, d. h. die Kurzstrecken-Kommunikationseinheit 5 kann ein komplettes oder teilweises Konfigurationsabbild der Konfiguration des Elektro-Installationsgeräts 1 auf das Mobilgerät 7 übertragen werden. Anschließend kann dieses Konfigurationsabbild für verschiedene Zwecke weiterverwendet werden. So können weitere baugleiche Elektro-Installationsgeräte 1 schnell und unkompliziert mit Hilfe des Mobilgeräts 7 über die drahtlose Kommunikationsschnittstelle, d. h. die Kurzstrecken-Kommunikationseinheit 5 mit derselben Konfiguration versehen werden. Das Konfigurationsabbild kann darüber hinaus zu Dokumentationszwecken verwendet werden oder bei der Fehlersuche herangezogen werden.

Als siebte neue Möglichkeit ist die Durchführbarkeit einer Authentifizierung eines Benutzers/Anwenders anzuführen: Die drahtlose Kommunikationsschnittstelle, d. h. die Kurzstrecken-Kommunikationseinheit 5 kann verwendet werden, um eine Authentifizierung des Benutzers/Anwenders durchzuführen. Es kann in bestimmten Anwendungen gewünscht sein, dass nur bestimmte Anwender eine Verstellung von Parametern oder eine Bedienung eines bestimmten Elektro-Installationsgeräts 1 vornehmen dürfen, wie etwa in öffentlichen Bereichen oder Hotelanlagen. Zur Authentifizierung kann beispielsweise die Hardware-Adresse der Kommunikationseinheit des Mobilgeräts 7 verwendet werden, oder es kann alternativ das Mobilgerät 7 dazu verwendet werden, um Authentifizierungsinformationen, wie Zertifikate, Schlüssel, Passwörter zu übertragen und gegebenenfalls auch darauf zu speichern. Nach der erfolgten Authentifizierung kann das Elektro-Installationsgeräts 1 dann über die konventionellen Bedienelemente 2 oder das Mobilgerät 7 bedient werden.

Als achte neue Möglichkeit ist die Realisierbarkeit eines Handbuch-Downloads anzuführen: In einer sehr einfachen Anwendung wird durch das Elektro-Installationsgerät 1 lediglich eine Web-Adresse per drahtloser Kommunikationsschnittstelle, d. h. Kurzstrecken-Kommunikationseinheit 5 zur Verfügung gestellt, mit deren Hilfe das Mobilgerät 7 das zugehörige Handbuch aus dem Internet herunterladen und anzeigen kann.

### Bezugszeichenliste

- 1: Gerät der Elektro-Installation und/oder Gebäudesystemtechnik und/oder Türkommunikation oder Elektro-Installationsgerät
- 2: konventionelles Bedienelement
- 3: Mikrocontroller-Unit
- 4: Parameterspeicher
- 5: Kurzstrecken-Kommunikationseinheit
- 6: -
- 7: Mobilgerät (mobiles Endgerät)
- 8: grafische Bedienschnittstelle
- 9: Applikation (lokale Anwendung)
- 10: Kurzstrecken-Kommunikationseinheit
- 11: drahtlose Kurzstrecken-Kommunikationsstrecke

## Patentansprüche

1. Gerät (1) der Elektro-Installation und/oder Gebäudesystemtechnik und/oder Türkommunikation mit einer Mikrocontroller-Unit (3), welche mit einem konventionellen Bedienelement (2) und optional mit einem Parameterspeicher (4) verbunden ist, wobei eine Kurzstrecken-Kommunikationseinheit (5) mit einer Reichweite von maximal 50 cm vorgesehen und mit der Mikrocontroller-Unit (3) verbunden ist und wobei eine Kurzstrecken-Kommunikation mit einer korrespondierend ausgebildeten Kurzstrecken-Kommunikationseinheit (10) eines Mobilgeräts (7) erfolgt.

2. Gerät (1) nach Anspruch 1, **dadurch gekennzeichnet, dass** durch die Kurzstrecken-Kommunikationseinheit (5) eine drahtlose Kurzstrecken-Kommunikationsstrecke (11) mittels Kurzstreckenfunk / NFC (Near Field Communication) realisiert ist.

3. Gerät (1) nach Anspruch 1, **dadurch gekennzeichnet, dass** durch die Kurzstrecken-Kommunikationseinheit (5) eine drahtlose Kurzstrecken-Kommunikationsstrecke (11) mittels Infrarot realisiert ist.

4. Gerät (1) nach Anspruch 1, **dadurch gekennzeichnet, dass** eine Vor-Ort-Bedienung des Elektro-Installationsgeräts (1) über eine grafische Bedienschnittstelle (8) des Mobilgeräts (7) via Kurzstrecken-Kommunikation erfolgt.

5. Gerät (1) nach Anspruch 1, **dadurch gekennzeichnet, dass** eine assistierte Bedienung des Elektro-Installationsgeräts (1) über eine grafische Bedienschnittstelle (8) des Mobilgeräts (7) via Kurzstrecken-Kommunikation erfolgt.

6. Gerät (1) nach Anspruch 1, **dadurch gekennzeichnet, dass** eine Parametrierung des Elektro-Installationsgeräts (1) über das Mobilgerät (7) via Kurzstrecken-Kommunikation erfolgt.

7. Gerät (1) nach Anspruch 1, **dadurch gekennzeichnet, dass** Software-Updates für das Elektro-Installationsgerät (1) über das Mobilgerät (7) via Kurzstrecken-Kommunikation erfolgen.

8. Gerät (1) nach Anspruch 1, **dadurch gekennzeichnet, dass** Statusabfragen und/oder Datenabfragen vom Elektro-Installationsgerät (1) über das Mobilgerät (7) via Kurzstrecken-Kommunikation erfolgen.

9. Gerät (1) nach Anspruch 1, **dadurch gekennzeichnet, dass** eine Übertragung eines kompletten oder teilweisen Konfigurationsabbildes des Elektro-Installationsgeräts (1) via Kurzstrecken-Kommunikation auf das Mobilgerät (7) erfolgt.

10. Gerät (1) nach Anspruch 1, **dadurch gekennzeichnet, dass** eine Authentifizierung eines Benutzers/Anwenders des Elektro-Installationsgeräts (1) via Kurzstrecken-Kommunikation unter Einsatz des Mobilgerät (7) erfolgt.

11. Gerät (1) nach Anspruch 1, **dadurch gekennzeichnet, dass** eine Geräteidentifizierung via Kurzstrecken-Kommunikation und gegebenenfalls ein Handbuch-Download unter Einsatz des Mobilgeräts (7) erfolgt.
